# EUROPEAN PATENT SPECIFICATION

(11) **EP 4 285 703 B1**
(45) Date of publication and mention of the grant of the patent: **08.07.2026**
(21) Application number: 22305793.6
(22) Date of filing: 31.05.2022
(51) Int. Cl.: A01C 23/00

(54) **SLURRY TANKER WITH A DUAL EMPTYING SYSTEM AND A SLOPE SENSOR**
GÜLLETANKWAGEN MIT DOPPELENTLEERUNGSSYSTEM UND NEIGUNGSSENSOR
CAMION-CITERNE POUR BOUES LIQUIDES DOTÉ D'UN DOUBLE SYSTÈME DE VIDANGE ET D'UN CAPTEUR D'INCLINAISON

(43) Date of publication of application: 06.12.2023
(73) Proprietor: Samson Group A/S, 8800 Viborg (DK)
(72) Inventor: MARZIN, Christophe, 29400 LANDIVISIAU (FR); LE BIHAN, Thomas, 29400 LANDIVISIAU (FR)
(74) Representative: Patrade A/S

(56) References cited:
- DE-A1- 19 851 613
- FR-A1- 2 759 681
- US-A1- 2014 060 404
- US-A1- 2015 156 964

## Description

### Field of the Invention

The present invention relates to a slurry tanker with a dual emptying system and a slope sensor configured for distributing slurry in regions with changing slope inclinations. The present invention relates to a method of determining the current slope inclination of the slurry tanker and controlling which valve in the dual emptying system to open.

The present disclosure further relates to a hinge arrangement configured for connecting with vehicles of different dimensions and to increase the degree of filling when filling the slurry tanker with slurry.

### Background of the Invention

Slurry tankers for use in regions with changing slope inclinations often comprise two slurry transporting tubes connected to a slurry tank compartment for containing the slurry to be distributed. The first slurry transporting tube is often placed in the front end while the second is placed in the back end of the slurry tank compartment.

When the slurry tanker distributes slurry on a downwards facing slope, the first slurry transporting tube will transport slurry from the slurry tank compartment. When the slope inclination changes and slurry tanker distributes slurry on a downwards facing slope, the operator of the slurry tanker must manually make the change to use the second slurry transporting tube instead of the first slurry transporting tube and vice versa.

Gravity ensures that slurry will gather in the front of the slurry tank compartment on a downwards facing slope and gather in the back on an upwards facing slope. If the operator forgets to switch between the first and second transporting tube or chooses the wrong one, the slurry tanker might be unable to distribute slurry if the slurry tank compartment is less than full. This can cause an insufficient distribution of slurry resulting in fewer crops. Furthermore, the functionality described also prevents unintentional loss of pressure in the slurry tanker compartment which also saves time during the unloading process.

Prior art DE19851613A1 describes a liquid manure container of the vehicle which is divided inside by at least one flood wall into at least two chambers. An opening in the flood wall near the bottom of the vehicle allows the chambers to be connected together and each of the chambers can be purposefully ventilated through ventilation members which are controlled in dependence on the output signal of a sensor.

Prior art FR2759681A1 describes a mobile tank which is provided with a liquid outlet in its rear and placed on a trailer which is coupled at its front to a tractor. The tank has a transverse partition, located in front of the trailer axle, enabling the confinement of part of the liquid in its front part and transfer of the liquid in the front part to its rear part. Prior art US2014060404A1 describes a storage tank sump arrangement for an agricultural implement. One agricultural implement includes row units configured to deliver flowable agricultural product to a field. The agricultural implement also includes a storage tank configured to hold the flowable agricultural product.

Thus, there is a need for a solution to minimize human error and make slurry distribution in regions with changing slope inclinations more efficient.

### Object of the Invention

It is an object of the invention to provide a slurry tanker with a dual emptying system and a slope sensor for automatically opening and closing valves in the dual emptying system depending on the information from the slope sensor.

### Description of the Invention

The object of the invention is achieved by a slurry tanker for distributing slurry in regions with changing slope inclinations. The slurry tanker comprises
- a slurry pressure tank compartment for containing slurry, wherein the slurry pressure tank compartment comprises a vehicle facing end and a slurry distribution end;
- a slope sensor configured for detecting the inclination of the slurry tanker;
- a dual emptying system comprising
   - a slurry transportation tube system comprising a first slurry transportation tube with an opening located at or near the bottom in the vehicle facing end of the slurry pressure tank compartment and a second slurry transportation tube with an opening located at or near the bottom in the slurry distribution end of the slurry pressure tank compartment;
   - a first tube valve configured for controlling the flow in the first slurry transportation tube;
   - a second tube valve configured for controlling the flow in the second transportation tube; and
   - a valve controller configured for controlling the valves as a function of information from the slope sensor;
- a slurry outlet tube configured for connecting with the slurry transportation tube system, the slurry outlet tube further comprises connecting means for connecting with a slurry distribution tool; and
- a first pump for filling slurry into and emptying slurry out of the slurry pressure tank compartment.

The process of distributing slurry on fields with changing slope inclinations causes the slurry inside the slurry pressure tank compartment to gather in the vehicle facing end or the slurry distribution end depending on the slope inclination and whether the slurry tanker is facing a downwards or upwards slope. The combination of the current slope inclination, the direction of the slurry tanker, and the amount of slurry contained in the slurry pressure tank compartment, can cause the first or the second transportation tube to be unable to transport slurry from the slurry pressure tank compartment to the slurry outlet tube as the remaining slurry have gathered around the opposite slurry transportation tube. Automatically determining and activating the first or the second tube valve based on the detected slope inclination, ensures a continuous distribution of slurry as the open tube valve enable pumping using the slurry transportation tube located at the end of the slurry pressure tank compartment where the slurry is gathered.

The slope sensor will detect the slope inclination based on the position of the slurry tanker relative to a horizontal plane. The slope sensor will, when detecting a slope, send information to the valve controller about the detected slope inclination of the slurry tanker. Depending on said detected information about the slope inclination of the slurry tanker, the valve controller determines whether to enable the first tube valve controlling the flow in the first slurry transportation tube or to enable the second tube valve controlling the flow in the second slurry transportation tube.

The slope sensor may be an inclination sensor or the slope sensor may include an inclination sensor.

In an embodiment, the valve controller may only change which tube valve is open if the detected slope inclination is oppositely inclined compared to the previously detected slope inclination and said detected slope inclination is above a threshold value. The threshold value ensures that the valve controller does not constantly change between which tube valve is open, for instance when distributing slurry on a substantially flat surface.

In another embodiment, the valve controller may only change which tube valve is open if the detected slope inclination is oppositely inclined compared to the previously detected slope inclination over a specified period of time. The time delay ensures that brief changes in the terrain does not cause the valve controller to constantly change which tube valve is open.

In further embodiment, the valve controller may only change which tube valve is open if the detected slope inclination is oppositely inclined compared to the previously detected slope inclination, over a specified period of time, and said detected slope inclination is above a threshold value. The threshold value and the time delay ensure that the valve controller does not constantly change between which tube valve is open when distributing slurry in bumpy terrain.

When distributing slurry on a downwards slope, gravity ensures that the slurry inside the slurry pressure tank compartment will gather in the vehicle facing end. The valve controller thus opens the first tube valve enabling transport of slurry contained in the slurry pressure tank compartment through an opening in the first slurry transportation tube located at or near the bottom in the vehicle facing end of the slurry pressure tank compartment.

When distributing slurry on an upwards slope, gravity ensures that the slurry inside the slurry pressure tank compartment will gather in the slurry distribution end. The valve controller thus opens the second tube valve enabling transport of slurry contained in the slurry pressure tank compartment through an opening in the second slurry transportation located at or near the bottom in the slurry distribution end of the slurry pressure tank compartment.

In an embodiment, a connecting piece connects the slurry outlet tube with the slurry transportation tube system.

In an embodiment, the first and second tube valves may be in the connecting piece.

In another embodiment, the first tube valve may be in the first transporting tube and the second tube valve may be in the second transporting tube.

In a further embodiment, the first tube valve may be placed between the first transportation tube and the connecting piece, and the second tube valve may be placed between the second transportation tube and the connecting piece.

One of the first or second tube valves may be opened. The first and second tube valves may both be closed.

The slurry outlet tube comprises connecting means for connecting with a slurry distribution tool. The slurry distribution tool may be a tool such as drip hose booms, trailing shoes, injectors, splash plates or incorporators.

The first pump is configured for pumping slurry into the slurry pressure tank compartment from a slurry reservoir during the process of filling the slurry pressure tank compartment with slurry. Furthermore, the first pump is configured for pumping slurry from inside the slurry pressure tank compartment through the dual emptying system, the slurry outlet tube, and a slurry distribution tool.

The first tube valve and/or the second tube valve may be a spade valve or a butterfly valve or a knife gate valve.

In an aspect of the invention, the slope sensor may be a sensor such as a gyroscope, a tilt sensor, an inclination sensor, or a combination.

These types of sensors or combinations enable the slope of the slurry tanker to be determined by simple means.

In an aspect of the invention, the first pump may be a vacuum pump located at the vehicle facing end. The vacuum pump may be configured for creating positive or negative pressure inside the slurry pressure tank compartment.

The first pump is configured for creating a positive or negative pressure inside the slurry pressure tank compartment. The first pump will create positive pressure when the slurry tanker is configured for distributing slurry. The first pump will create a negative pressure when the slurry tanker is configured for filling slurry in the slurry pressure tank compartment.

The positive or negative pressure inside the slurry pressure tank compartment is relative to the pressure outside of the slurry pressure tank compartment.

In an aspect of the invention, the dual emptying system may comprise a T-piece connector connecting the first slurry transportation tube, the second slurry transportation tube, and the slurry outlet tube.

The T-piece connector is a simple way to interconnect the first slurry transportation tube, the second slurry transportation tube, and the slurry outlet tube.

In an aspect of the invention, the dual emptying system may be located inside the slurry pressure tank compartment. This will enable that additional equipment can be connected to the slurry tanker at a minor total volume reduction of the slurry pressure tank compartment.

The valve controller does not need to be inside the slurry pressure tank compartment as long as the valve controller can control the first tube valve and the second tube valve.

In an aspect of the invention, the slurry tanker may further comprise an external second pump such as an accelerator pump in fluid communication with the slurry outlet tube and the T-piece connector connected to the dual emptying system located inside the slurry pressure tank compartment.

The accelerator pump may be configured for assisting the first pump in controlling the flow of the slurry in the first and second slurry transportation tube.

Locating the dual emptying tank inside the slurry pressure tank compartment makes it possible to add the second pump to slurry tanker and thereby make slurry distribution more efficient.

The second pump may assist the first pump in controlling the flow of slurry both into and out of the slurry pressure tank compartment.

In an aspect of the invention, the slurry tanker may further comprise a slurry tanker controller configured for changing between a slurry filling state, a slurry distribution state, and a transportation state.

The different states of the slurry tanker may affect the dual emptying system. The slurry tanker controller may send information to the valve controller regarding the state of the slurry tanker.

The slurry filling state may prompt one of the tube valves to open or close the other, while activating the first pump for creating a negative pressure such that the slurry pressure tank compartment is filed with slurry.

The slurry distribution state may prompt the valve controller to open the first or second tube valve depending on the slope inclination detected by the slope sensor, while the first pump creates a positive pressure in the slurry pressure tank compartment for displacing the slurry through the slurry outlet tube.

The different states of the slurry tanker may affect the first pump. The slurry tanker controller may send commands to the first pump depending on the state of the slurry tanker. The slurry filling state may prompt the first pump to create a negative pressure inside the slurry pressure tank compartment, thus pumping slurry into the slurry pressure tank compartment from a slurry reservoir. The slurry distribution state may prompt the first pump to create a positive pressure inside the slurry pressure tank compartment, thus enabling the slurry contained inside the slurry pressure tank compartment to be pumped out through the dual emptying system, the slurry outlet tube, and a slurry distribution tool. Furthermore, the second pump may also be prompted to assist the first pump in controlling the flow of the slurry in the dual emptying system. The transport state may prompt the first pump and the second pump to stop pumping and both tube valves are closed.

In an aspect of the invention, the slurry tanker may further comprise a hinge arrangement for connecting the slurry tanker to a vehicle. The hinge arrangement further comprises
- slant adjustment means configured for adjusting the slant of the slurry pressure tank compartment;
- a hinge controller configured for controlling the slant adjustment means as a function of the height of the connected vehicle and as a function of the state defined by the slurry tank controller.

The slurry tanker may be configured for connecting to vehicles of various sizes and coupling means and placement thereof. When connecting the slurry tanker to a vehicle, the hinge controller may adjust the slant adjustment means to ensure that the undercarriage of the slurry tanker is substantially parallel to the ground, thereby compensating for the size of the vehicle.

During the filling state, the hinge controller may prompt the slant adjustment means to tilt the slurry pressure tank compartment to increase the degree of filling slurry into the slurry pressure tank compartment.

The slant adjustment means may be an electric cylinder, hydraulic cylinder, or a pneumatic press.

The object of the invention is also achieved by a method for synchronized control of tube valves in a dual emptying system in a slurry tanker. The method comprises steps of
- determining an inclination of the slurry tanker; and
- controlling a first tube valve and a second tube valve as a function of said inclination of the slurry tanker.

The step of determining the inclination of the slurry tanker may include information from a slope sensor configured for detecting the inclination of the slurry tanker.

The step of controlling the first and second tube valve comprised in a dual emptying system may include sending said information from the slope sensor to a valve controller. Depending on said information about the slope inclination, the valve controller may determine whether to enable the first tube valve controlling the flow in a first slurry transportation tube located at or near the bottom of a vehicle facing end of a slurry pressure tank compartment or to enable the second tube valve controlling the flow in a second slurry transportation tube located at or near the bottom of a slurry distribution end of the slurry pressure tank compartment.

When distributing slurry on a downwards slope, the slurry inside the slurry pressure tank compartment will gather in the vehicle facing end. The valve controller thus opens the first tube valve enabling transport of slurry contained in the slurry pressure tank compartment through an opening in the first slurry transportation tube located at or near the bottom in the vehicle facing end of the slurry pressure tank compartment.

When distributing slurry on an upwards slope, the slurry inside the slurry pressure tank compartment will gather in the slurry distribution end. The valve controller thus opens the second tube valve enabling transport of slurry contained in the slurry pressure tank compartment through an opening in the second slurry transportation located at or near the bottom in the slurry distribution end of the slurry pressure tank compartment.

In an aspect of the invention, the method may further comprise an act of continuously determining the inclination and controlling the tube valves connected to the first or second slurry transportation tube.

The slurry tanker may distribute slurry on a field with changing slope inclinations, thus the valve controller may change which tube valve is open if the slurry tanker transitions from distributing slurry on a downwards facing slope to distributing slurry on an upward facing slope or vice versa, to avoid the slurry gathering in the slurry pressure tank compartment opposite from the open slurry transportation tube.

In an aspect of the invention, the method may further comprise three operational states
- a slurry filling state, wherein the first pump may generate a negative pressure inside the slurry pressure tank compartment configured for filling slurry into the slurry pressure tank compartment;
- a slurry distribution state, wherein the first pump may generate a positive pressure inside the slurry pressure tank compartment configured for distributing slurry from the slurry pressure tank compartment onto a field; and
- a transport state configured for transporting slurry to and from locations.

The slurry tanker may comprise a slurry tanker controller configured for changing between the three operational states.

The slurry tanker may comprise a hinge arrangement configured for connecting to vehicles of various sizes and coupling means and placement thereof. The hinge arrangement may comprise slant adjustment means configured for adjusting the slant of the slurry pressure tank compartment and a hinge controller configured for controlling the slant adjustment means as a function of the height of the connected vehicle and as a function of the state defined by the slurry tank controller.

When connecting the slurry tanker to a vehicle, the hinge controller may adjust the slant adjustment means to ensure that the undercarriage of the slurry tanker is substantially parallel to ground, thereby compensating for the size of the vehicle.

During the filling state, the hinge controller may prompt the slant adjustment means to tilt the slurry pressure tank compartment to increase the degree of filling slurry into the slurry pressure tank compartment.

The different operational states of the slurry tanker may affect both the dual emptying system and a first pump configured for controlling the flow of the slurry in the dual emptying system. Additionally, the operational state may also affect a second pump configured for assisting the first pump.

In an aspect, the slurry tanker may be one or a combination of the previously described embodiments.

The disclosure also provides a slurry tanker adaptable to different vehicles having different connection point heights. The slurry tanker comprises
- a slurry pressure tank compartment for containing slurry, wherein the slurry pressure tank compartment comprises a vehicle facing end and a slurry distribution end;
- a slope sensor configured for detecting the inclination of the slurry tanker;
- a slurry distribution system for distribution of slurry;
- two sets of wheels connected to the slurry pressure tank compartment via a suspension system; and
- a pivotal hinge arrangement adaptable to different vehicles with having different connection point heights, wherein the hinge arrangement comprises
   - a hinge body pivotally connected to the vehicle connecting end of the slurry pressure tank compartment, the hinge body comprises a vehicle connecting end configured for connection with a vehicle, an opposite displacement end adapted for being displaced; and
   - an actuator positioned on the slurry pressure tank compartment, the actuator comprising a displaceable arm connected to the displacement end, wherein displacement of the displaceable arm causes pivotal movement of the vehicle connecting end; and
   - a hinge controller configured for controlling the actuator as a function of the slope sensor.

The mechanical coupling between the slurry tanker and a vehicle or more specific between the vehicle connecting end of the hinge arrangement and the vehicle will vary in relative height to the ground depending on the size and/or design of a vehicle.

The hinge body is pivotally connected via a pivot connector to the vehicle connecting end of the slurry pressure tank compartment.

Presently hinge arrangements are static and thus the slope or inclination of the slurry tanker will vary between different vehicles. This also means that the different parts of the suspension system i.e., if the mechanical coupling with the vehicle is at a high vertical level, then the suspensions of the wheels closest to the slurry distribution end will have a higher load compared to the wheels closest to the vehicle facing end. The opposite is the case when the mechanical coupling with the vehicle is at a low vertical level. It would be preferred that the suspension is the same on all wheels as such a predetermined load will inhibit the maximum movement of the suspension system in some dimensions. If a spring of a suspension system is at or close to a maximum compression then further compression may result in breakage.

Thus, the pivotal hinge arrangement can adapt to varying heights of mechanical coupling of different vehicles. Such that the load on the suspension system is distributed evenly or at least somewhat evenly between the wheels.

The actuator may be an electric actuator or a hydraulic actuator or a pneumatic actuator.

In an aspect, the suspension system may provide load information to the hinge hinge controller and the hinge controller being further configured for controlling the actuator as a function of the slope sensor and the load information. The load information may further improve the pivotal positioning of the hinge arrangement.

In an aspect the slope sensor is a sensor such as a gyroscope, a tilt sensor, an inclination sensor, or a combination. These types of sensors or combinations enable the slope of the slurry tanker to be determined by simple means.

### Description of the Drawing

Embodiments of the invention will be described in the figures, whereon:
- Fig. 1: illustrates a slurry tanker connected to a vehicle;
- Fig. 2: illustrates a dual emptying system;
- Fig. 3A: illustrates a slurry tanker distributing slurry on a downwards facing slope;
- Fig. 3B: illustrates a slurry tanker distributing slurry on an upwards facing slope;
- Fig. 4: illustrates a slurry tanker comprising a second pump; and
- Fig. 5: illustrates a slurry tanker with a pivotal hinge arrangement.

### Detailed Description of the Invention

| | |
|---|---|
| Slurry tanker | 10 |
| Slurry | 11 |
| Slope | 12 |
| Slurry pressure tank compartment | 20 |
| Vehicle facing end | 21 |
| Slurry distribution end | 22 |
| Slope sensor | 30 |
| Dual emptying system | 40 |
| Slurry transportation tube system | 41 |
| First slurry transportation tube | 410 |
| Second slurry transportation tube | 411 |
| T-piece connector | 412 |
| First tube valve | 42 |
| Second tube valve | 43 |
| Valve controller | 44 |
| Slurry outlet tube | 50 |
| Slurry distribution tool | 51 |
| First pump | 60 |
| Vacuum pump | 61 |
| Second pump | 70 |
| Accelerator pump | 71 |
| Slurry tanker controller | 80 |
| Hinge arrangement | 90 |
| Actuator | 91 |
| Hinge controller | 92 |
| Hinge body | 93 |
| Vehicle connecting end | 94 |
| Displacement end | 95 |
| Pivot connector | 96 |
| Vehicle connector | 97 |
| Suspension system | 100 |

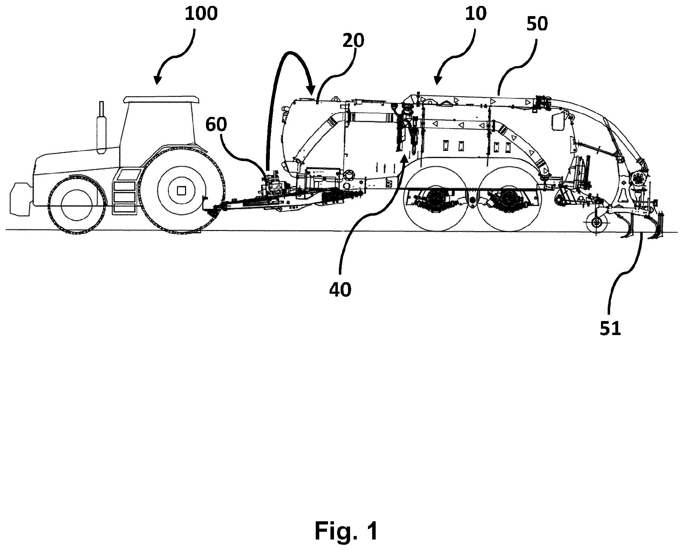

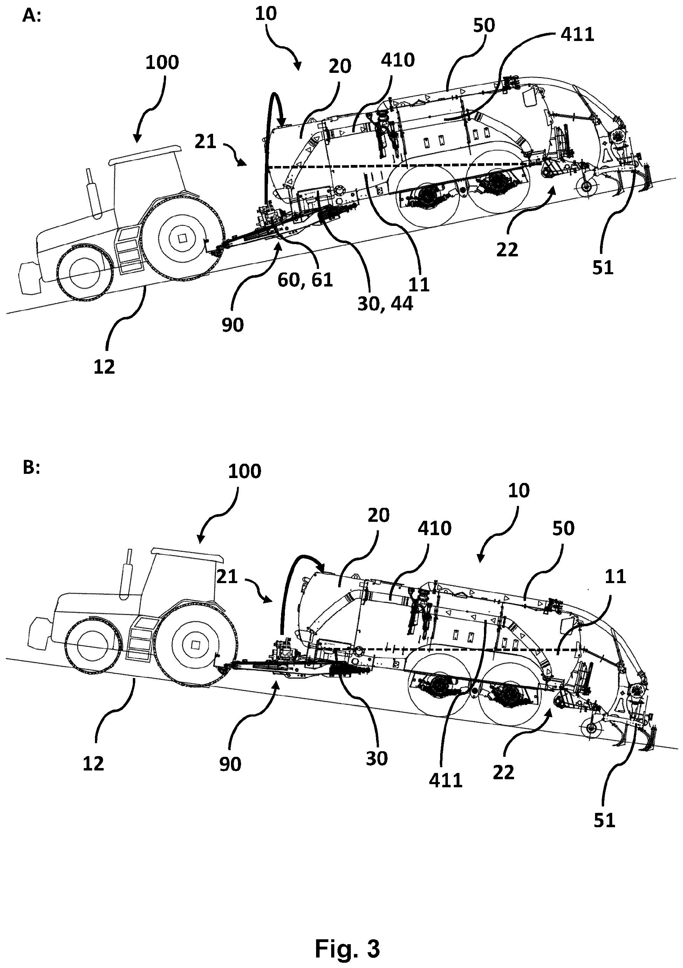

Fig. 1 and 3 illustrates a slurry tanker 10 connected to a vehicle 100 and a slurry distribution tool 51.

The slurry tanker 10 comprises a slurry pressure tank compartment 20 for containing slurry, a dual emptying system 40 connected to a slurry outlet tube 50, and a first pump 60. The first pump may be a vacuum pump 61. In the figures the first pump 60 is illustrated by a box. The connection to the slurry pressure tank compartment 20 is represented by an arrow.

The first pump controls the flow of slurry being pumped from the slurry pressure tank compartment 20, first through the dual emptying system 40 and secondly through the slurry outlet tube 50 and lastly distributed by the slurry distribution tool 51, as well as pumping slurry 11 into the slurry pressure tank compartment 20 from an external slurry reservoir.

The slurry tanker 10 further comprises a slope sensor 30 configured for detecting the current inclination of the slurry tanker 10.

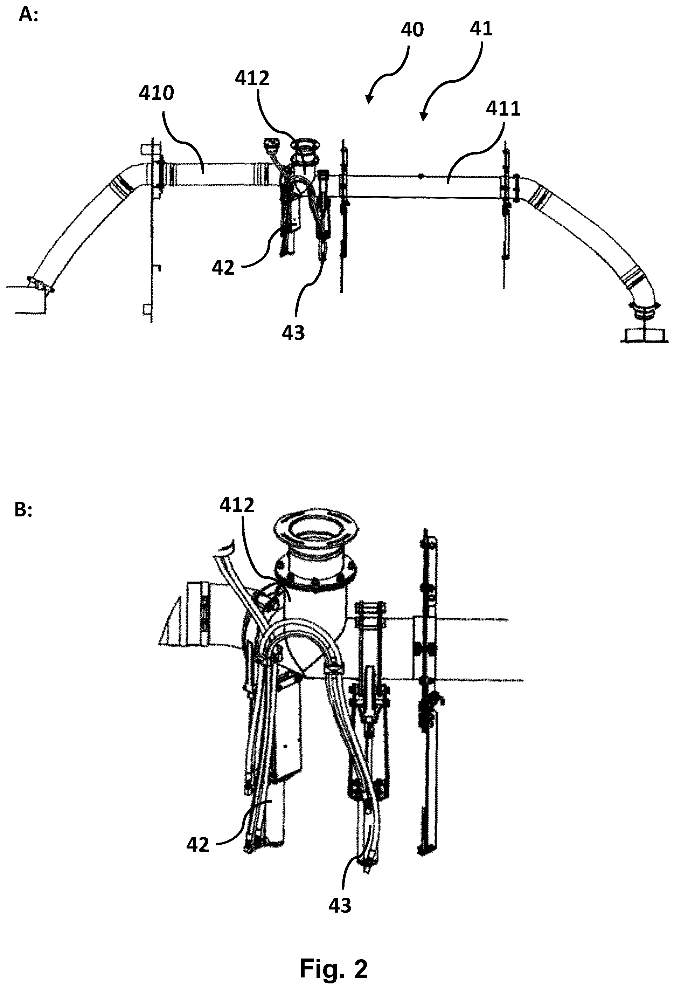

Fig. 2A illustrates the dual emptying system 40 located inside the slurry pressure tank compartment 20 comprising a slurry transportation tube system 41 with a first slurry transportation tube 410 and second slurry transportation tube 411. The first slurry transportation tube 410 has an opening located at or near the bottom in a vehicle facing end 21 of the slurry pressure tank compartment 20. The second slurry transportation tube 411 has an opening located at or near the bottom in a slurry distribution end 22 of the slurry pressure tank compartment 20.

The valve controller 44 is not shown in the figure. The valve controller 44 could be fitted inside the slurry pressure tank compartment 20, however in most cases, the valve controller 44 will be placed on the outer side of a slurry tanker 10 as it is simply more accessible in that position.

The dual emptying system 40 further comprise a first tube valve 42 configured for controlling the flow of slurry 11 in the first slurry transportation tube 410 and a second tube valve 43 configured for controlling the flow of slurry in the second slurry transportation tube 411, as illustrated in fig. 2B. A connecting piece, such as a T-piece connector 412, connects the dual emptying system 40 to the slurry outlet tube 50.

The first and second tube valves are controlled by a valve controller 44 configured for activating the first tube valve 42 or the second tube valve 43 depending on information received from the slope sensor 30 concerning the current inclination of the slurry tanker 10.

Fig. 3A illustrates a slurry tanker 10 distributing slurry 11 on a downwards slope 12 where gravity causes the slurry 11 inside the slurry pressure tank compartment 20 to gather in the vehicle facing end 21 of the slurry pressure tank compartment 20. The slope sensor 30 detects a downwards facing slope and send the slope data to the valve controller 44. The valve controller 44 checks if the first tube valve 42 is open and opens the first tube valve if not already open. The valve controller 44 further ensures that only the first tube valve 42 is open. Opening the first valve 42 causes the first pump 60 to pump slurry using the first transportation tube 410.

Fig. 3B illustrates a slurry tanker 10 distributing slurry 11 on an upwards slope 12 where gravity causes the slurry 11 inside the slurry pressure tank compartment 20 to gather in the slurry distribution end 22 of the slurry pressure tank compartment 20. The slope sensor 30 detects an upwards facing slope and send the slope data to the valve controller 44. The valve controller 44 checks if the second tube valve 43 is open and opens the second tube valve if not already open. The valve controller 44 further ensures that only the second tube valve 43 is open. Opening the second valve 44 causes the first pump 60 to pump slurry using the second transportation tube 411.

Since the valve controller 44 uses data from the slope sensor 30 to determine which tube valve to open, it is possible to ensure a continuous distribution of slurry as the open tube valve enables pumping using the slurry transportation tube located at the end of the gathered slurry.

By having the dual emptying system 40 inside slurry pressure tank compartment 20, it is possible to add a second pump 70, such as an accelerator pump 71, to the slurry tanker 10. The second pump 70 assist the first pump 60 in controlling the flow of slurry 11 being pumped into and out of the slurry pressure tank compartment 20, thus increasing the efficiency of the pumping system.

In figure 3, the slurry inside the slurry tanker is represented by a dotted line extending across the slurry pressure tank compartment 20.

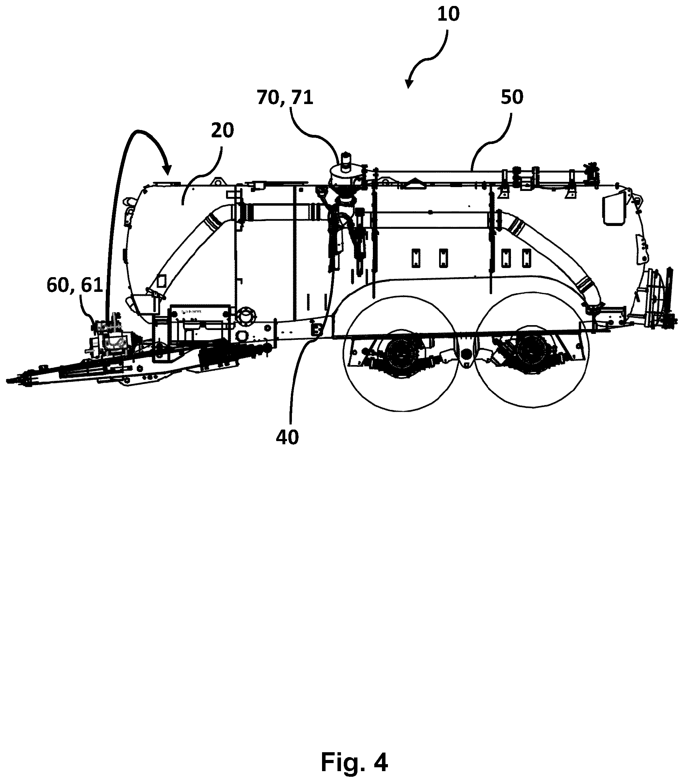

Fig. 4 illustrates a slurry tanker 10 comprising a second pump 70. The slurry tanker 10 is similar to the embodiments shown in figure 1-3. However, the slurry tanker 10 utilizes that the dual emptying system 40 is positioned inside the slurry pressure tank compartment 20. This enables the use of a second pump 70, which may be an accelerator pump 71. The second pump 70 will support a first pump 60, 61, when the slurry tanker 10 is in a slurry distribution state, where slurry is forced out of the slurry pressure tank compartment 20 though the dual emptying system 40 pass the second pump 70,71 through the slurry outlet tube to a slurry distribution tool 51 (not shown).

The second pump 70, 71 can be attached because the dual emptying system 40 is on the inside of the slurry pressure tank compartment 20, because there would not be sufficient space for both the second pump 70, 71 and the dual emptying system 40 on the outer side of the slurry pressure tank compartment 20.

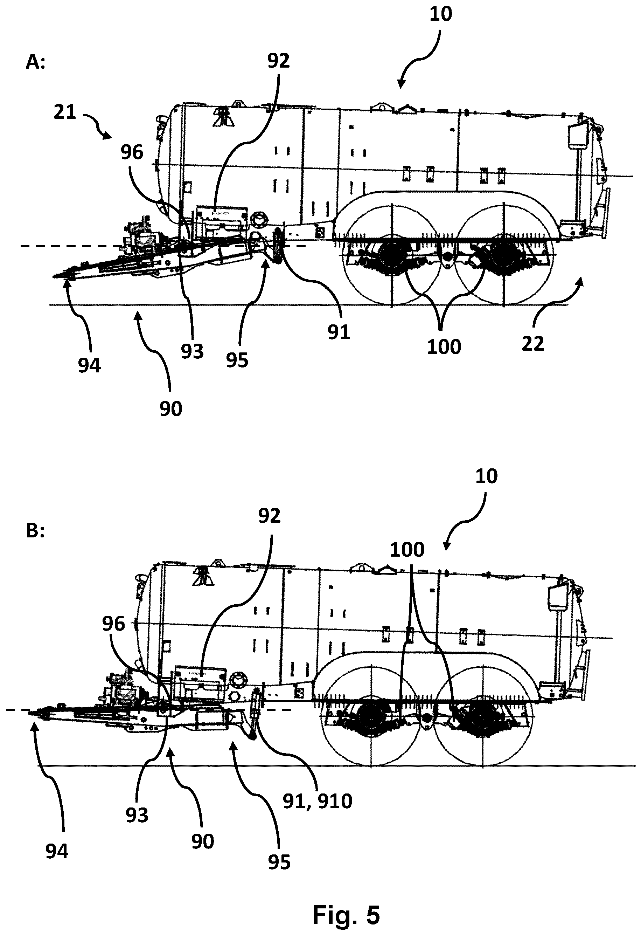

Fig. 5 illustrates a slurry tanker 10 with a pivotal hinge arrangement 90. The two most extreme positions are shown in figure 5. In figure 5A, a vehicle connecting end 94 of the hinge arraignment 90 is in a lowest vertical level and in figure 5b, the vehicle connecting end 94 of the hinge arraignment 90 is in a highest vertical level.

The slurry tanker 10 has a slurry pressure tank compartment 20for containing slurry 11, wherein the slurry pressure tank compartment 20 comprises a vehicle facing end 21 and a slurry distribution end 22. The slurry tanker has a slope sensor 30 configured for detecting the inclination of the slurry tanker 10 to help in adjusting the vertical level of the vehicle connecting end 90. The slurry tanker 10 is shown without a slurry distribution system for distribution of slurry, however this will be present during normal use. The slurry tanker has two sets of wheels connected to the slurry pressure tank compartment 20 via a suspension system.

The pivotal hinge arrangement 90 is adaptable to different vehicles with having different connection point heights. The hinge arrangement 90 comprises a hinge body 93 pivotally connected to the vehicle connecting end 94 of the slurry pressure tank compartment 20. The hinge body 93 comprises the previously mentioned vehicle connecting end 94 configured for connection with a vehicle, and an opposite displacement end 95 adapted for being displaced. The displacement of the displacement end 95 will cause displacement of the vehicle connecting end 94.

The pivotal hinge arrangement 90 further comprises an actuator 91 positioned on the slurry pressure tank compartment 20. The actuator 91 comprises a displaceable arm connected to the displacement end 95, wherein displacement of the displaceable arm causes pivotal movement of the vehicle connecting end 94

The pivotal hinge arrangement 90 further comprises a hinge controller 92 configured for controlling the actuator 91 as a function of the slope sensor 30 i.e. the data from the slope sensor 30.

## Claims

1. A slurry tanker (10) for distributing slurry (11) in regions with changing slope inclinations (12), the slurry tanker (10) comprising
- a slurry pressure tank compartment (20) for containing slurry (11), wherein the slurry pressure tank compartment (20) comprises a vehicle facing end (21) and a slurry distribution end (22);
- a slope sensor (30) configured for detecting the inclination of the slurry tanker (10);
- a slurry outlet tube (50) configured for connecting with a slurry transportation tube system (41), the slurry outlet tube (50) further comprises connecting means for connecting with a slurry distribution tool (51); and
- a first pump (60) for filling slurry into and emptying slurry out of the slurry pressure tank compartment (20);
**characterised by**
- a dual emptying system (40) comprising - the slurry transportation tube system (41) comprising a first slurry transportation tube (410) with an opening located at or near the bottom in the vehicle facing end (21) of the slurry pressure tank compartment (20) and a second slurry transportation tube (411) with an opening located at or near the bottom in the slurry distribution end (22) of the slurry pressure tank compartment (20);
- a first tube valve (42) configured for controlling the flow in the first slurry transportation tube (410);
- a second tube valve (43) configured for controlling the flow in the second transportation tube (411); and
- a valve controller (44) configured for controlling the valves (42, 43) as a function of information from the slope sensor (30).

2. The slurry tanker (10) according to claim 1, wherein the slope sensor (30) is a sensor such as a gyroscope, a tilt sensor, an inclination sensor, or a combination.

3. The slurry tanker (10) according to any of the preceding claims, wherein the first pump (60) is a vacuum pump (61) located at the vehicle facing end (21), the vacuum pump (61) being configured for creating positive or negative pressure inside the slurry pressure tank compartment (20).

4. The slurry tanker (10) according to any of the preceding claims, wherein the dual emptying system (40) comprises a T-piece connector (412) connecting the first slurry transportation tube (410), the second slurry transportation tube (411), and the slurry outlet tube (50).

5. The slurry tanker (10) according to claim 4, further comprising an external second pump (70) being an accelerator pump (71) in communication with the slurry outlet tube (50) and the T-piece connector (412) connected to the dual emptying system (40) located inside the slurry pressure tank compartment (20), wherein the accelerator pump (71) is configured for assisting the first pump in controlling the flow of the slurry in the first and second slurry transportation tube (410, 411).

6. The slurry tanker (10) according to any of the preceding claims, wherein the dual emptying system (40) is located inside the slurry pressure tank compartment (20).

7. The slurry tanker (10) according to any of the preceding claims, further comprising a slurry tanker controller configured for changing between a slurry filling state, a slurry distribution state, and a transport state.

8. The slurry tanker (10) according to claim 7, further comprising a hinge arrangement (90) for connecting the slurry tanker (10) to a vehicle (100), the hinge arrangement (90) comprising
- slant adjustment means (91) configured for adjusting the slant of the slurry pressure tank compartment (20);
- a hinge controller (92) configured for controlling the slant adjustment means (91) as a function of the height of the connected vehicle (100), and as a function of the state defined by the slurry tank controller (80).

9. A method for synchronized control of tube valves in a dual emptying system (40) in a slurry tanker (10) according to any one of claims 1 to 8, wherein the method comprises steps of
- determining an inclination of the slurry tanker (10); and
- controlling a first tube valve (42) and a second tube valve (43) as a function of said inclination of the slurry tanker (10).

10. The method according to claim 9, further comprising an act of continuously determining (110) the inclination and controlling (120) the tube valves connected to the first or second slurry transportation tube (410, 411).

11. The method according to claims 9 or 10, wherein the method further comprises three operational states
- a slurry filling state (81) wherein the first pump (60) generates a negative pressure inside the slurry pressure tank compartment (20) configured for filling slurry (11) into the slurry pressure tank compartment (20);
- a slurry distribution state (82) wherein the first pump (60) generates a positive pressure inside the slurry pressure tank compartment (20) configured for distributing slurry (11) from the slurry pressure tank compartment (20) onto a field; and
- a transport state (83) configured for transporting slurry to and from locations.

## Patentansprüche

1. Gülletankwagen (10) zum Verteilen von Gülle (11) in Bereichen mit wechselnden Neigungsschrägen (12), wobei der Gülletankwagen (10) Folgendes umfasst
- einen Gülledrucktankraum (20) zum Enthalten von Gülle (11), wobei der Gülledrucktankraum (20) ein einem Fahrzeug zugewandtes Ende (21) und ein Gülleverteilungsende (22) umfasst;
- einen Neigungssensor (30), der dazu konfiguriert ist, die Schräge des Gülletankwagens (10) zu erkennen;
- ein Gülleauslassrohr (50), das dazu konfiguriert ist, sich mit einem Gülletransportrohrsystem (41) zu verbinden, wobei das Gülleauslassrohr (50) ferner ein Verbindungsmittel zum Verbinden mit einem Gülleverteilungswerkzeug (51) umfasst; und
- eine erste Pumpe (60) zum Einfüllen in und Entleeren von Gülle aus dem Gülledrucktankraum (20);
**gekennzeichnet durch**
- ein Doppelentleerungssystem (40), umfassend
- das Gülletransportrohrsystem (41), umfassend ein erstes Gülletransportrohr (410) mit einer Öffnung, die sich an oder nahe dem Boden in dem dem Fahrzeug zugewandten Ende (21) des Gülledrucktankraums (20) befindet, und ein zweites Gülletransportrohr (411) mit einer Öffnung, die sich an oder nahe dem Boden in dem Gülleverteilungsende (22) des Gülledrucktankraums (20) befindet;
- ein erstes Rohrventil (42), das dazu konfiguriert ist, den Durchfluss in dem ersten Gülletransportrohr (410) zu steuern;
- ein zweites Rohrventil (43), das dazu konfiguriert ist, den Durchfluss in dem zweiten Gülletransportrohr (411) zu steuern; und
- eine Ventilsteuerung (44), die dazu konfiguriert ist, die Ventile (42, 43) als eine Funktion von Informationen des Neigungssensors (30) zu steuern.

2. Gülletankwagen (10) nach Anspruch 1, wobei der Neigungssensor (30) ein Sensor wie ein Gyroskop, ein Schieflastsensor, ein Schrägesensor oder eine Kombination davon ist.

3. Gülletankwagen (10) nach einem der vorhergehenden Ansprüche, wobei die erste Pumpe (60) eine Vakuumpumpe (61) ist, die sich an dem dem Fahrzeug zugewandten Ende (21) befindet, wobei die Vakuumpumpe (61) dazu konfiguriert ist, einen Über- oder Unterdruck innerhalb des Gülledrucktankraums (20) zu erzeugen.

4. Gülletankwagen (10) nach einem der vorhergehenden Ansprüche, wobei das Doppelentleerungssystem (40) einen T-Stück-Verbinder (412) umfasst, der das erste Gülletransportrohr (410), das zweite Gülletransportrohr (411) und das Gülleauslassrohr (50) verbindet.

5. Gülletankwagen (10) nach Anspruch 4, ferner umfassend eine externe zweite Pumpe (70), die eine Beschleunigerpumpe (71) in Kommunikation mit dem Gülleauslassrohr (50) und dem T-Stück-Verbinder (412) ist, der mit dem Doppelentleerungssystem (40) verbunden ist, das sich innerhalb des Gülledrucktankraums (20) befindet, wobei die Beschleunigerpumpe (71) dazu konfiguriert ist, die erste Pumpe beim Steuern des Durchflusses der Gülle in dem ersten und zweiten Gülletransportrohr (410, 411) zu unterstützen.

6. Gülletankwagen (10) nach einem der vorhergehenden Ansprüche, wobei sich das Doppelentleerungssystem (40) innerhalb des Gülledrucktankraums (20) befindet.

7. Gülletankwagen (10) nach einem der vorhergehenden Ansprüche, ferner umfassend eine Gülletankwagensteuerung, die dazu konfiguriert ist, zwischen einem Gülleeinfüllzustand, einem Gülleverteilungszustand und einem Transportzustand zu wechseln.

8. Gülletankwagen (10) nach Anspruch 7, ferner umfassend eine Scharnieranordnung (90) zum Verbinden des Gülletankwagens (10) mit einem Fahrzeug (100), wobei die Scharnieranordnung (90) Folgendes umfasst
- ein Schrägstellungseinstellmittel (91), das dazu konfiguriert ist, die Schrägstellung des Gülledrucktankraums (20) einzustellen;
- eine Scharniersteuerung (92), die dazu konfiguriert ist, das Schrägstellungseinstellmittel (91) als eine Funktion der Höhe des verbundenen Fahrzeugs (100) und als eine Funktion des durch die Gülletanksteuerung (80) definierten Zustands zu steuern.

9. Verfahren zur synchronisierten Steuerung von Rohrventilen in einem Doppelentleerungssystem (40) in einem Gülletankwagen (10) nach einem der Ansprüche 1 bis 8, wobei das Verfahren folgende Schritte umfasst
- Bestimmen einer Schräge des Gülletankwagens (10); und
- Steuern eines ersten Rohrventils (42) und eines zweiten Rohrventils (43) als eine Funktion der Schräge des Gülletankwagens (10).

10. Verfahren nach Anspruch 9, ferner umfassend einen Vorgang eines kontinuierlichen Bestimmens (110) der Schräge und eines Steuerns (120) der mit dem ersten oder zweiten Gülletransportrohr (410, 411) verbundenen Rohrventile.

11. Verfahren nach Anspruch 9 oder 10, wobei das Verfahren ferner drei Betriebszustände umfasst
- einen Gülleeinfüllzustand (81), wobei die erste Pumpe (60) einen Unterdruck innerhalb des Gülledrucktankraums (20) erzeugt, der dazu konfiguriert ist, Gülle (11) in den Gülledrucktankraum (20) einzufüllen;
- einen Gülleverteilungszustand (82), wobei die erste Pumpe (60) einen Überdruck innerhalb des Gülledrucktankraums (20) erzeugt, der dazu konfiguriert ist, Gülle (11) aus dem Gülledrucktankraum (20) auf ein Feld zu verteilen; und
- einen Transportzustand (83), der dazu konfiguriert ist, um Gülle zu und von Orten zu transportieren.

## Revendications

1. Camion-citerne pour boues liquides (10) destiné à distribuer des boues liquides (11) dans des régions à inclinaisons de pentes variables (12), le camion-citerne pour boues liquides (10) comprenant
- un compartiment de réservoir sous pression pour boues liquides (20) destiné à contenir des boues liquides (11), dans lequel le compartiment de réservoir sous pression pour boues liquides (20) comprend une extrémité faisant face au véhicule (21) et une extrémité de distribution de boues liquides (22) ;
- un capteur de pente (30) configuré pour détecter l'inclinaison du camion-citerne pour boues liquides (10) ;
- un tube de sortie de boues liquides (50) configuré pour être relié à un système de tubes de transport de boues liquides (41), le tube de sortie de boues liquides (50) comprenant en outre des moyens de liaison pour être relié à un outil de distribution de boues liquides (51) ; et
- une première pompe (60) pour introduire les boues liquides dans le compartiment de réservoir sous pression pour boues liquides (20) et vider celui-ci des boues liquides ; **caractérisé par**
- un système de double vidange (40) comprenant
- le système de tubes de transport de boues liquides (41) comprenant un premier tube de transport de boues liquides (410) avec une ouverture située au niveau ou à proximité du bas de l'extrémité faisant face au véhicule (21) du compartiment de réservoir sous pression pour boues liquides (20) et un second tube de transport de boues liquides (411) avec une ouverture située au niveau ou à proximité du bas de l'extrémité de distribution de boues liquides (22) du compartiment de réservoir sous pression pour boues liquides (20) ;
- une première soupape tubulaire (42) configurée pour réguler le débit dans le premier tube de transport de boues liquides (410) ;
- une seconde soupape tubulaire (43) configurée pour réguler le débit dans le second tube de transport (411) ; et
- un dispositif de commande de soupape (44) configuré pour commander les soupapes (42, 43) en fonction des informations en provenance du capteur de pente (30).

2. Camion-citerne pour boues liquides (10) selon la revendication 1, dans lequel le capteur de pente (30) est un capteur tel qu'un gyroscope, un capteur de basculement, un capteur d'inclinaison ou une combinaison de ceux-ci.

3. Camion-citerne pour boues liquides (10) selon l'une quelconque des revendications précédentes, dans lequel la première pompe (60) est une pompe à vide (61) située à l'extrémité faisant face au véhicule (21), la pompe à vide (61) étant configurée pour créer une pression positive ou négative à l'intérieur du compartiment de réservoir sous pression pour boues liquides (20).

4. Camion-citerne pour boues liquides (10) selon l'une quelconque des revendications précédentes, dans lequel le système de double vidange (40) comprend un raccord en T (412) reliant le premier tube de transport de boues liquides (410), le second tube de transport de boues liquides (411) et le tube de sortie de boues liquides (50).

5. Camion-citerne pour boues liquides (10) selon la revendication 4, comprenant en outre une seconde pompe externe (70) étant une pompe d'accélérateur (71) en communication avec le tube de sortie de boues liquides (50) et le raccord en T (412) relié au système de double vidange (40) situé à l'intérieur du compartiment de réservoir sous pression pour boues liquides (20), dans lequel la pompe d'accélérateur (71) est configurée pour aider la première pompe à réguler le débit des boues liquides dans le premier et le second tube de transport de boues liquides (410, 411).

6. Camion-citerne pour boues liquides (10) selon l'une quelconque des revendications précédentes, dans lequel le système de double vidange (40) est situé à l'intérieur du compartiment de réservoir sous pression pour boues liquides (20).

7. Camion-citerne pour boues liquides (10) selon l'une quelconque des revendications précédentes, comprenant en outre un dispositif de commande de camion-citerne pour boues liquides configuré pour changer d'état entre un état de remplissage de boues liquides, un état de distribution de boues liquides et un état de transport.

8. Camion-citerne pour boues liquides (10) selon la revendication 7, comprenant en outre un agencement de charnière (90) permettant de relier le camion-citerne pour boues liquides (10) à un véhicule (100), ledit agencement de charnière (90) comprenant
- des moyens de réglage d'inclinaison (91) configurés pour régler l'inclinaison du compartiment de réservoir sous pression pour boues liquides (20) ;
- un dispositif de commande de charnière (92) configuré pour commander les moyens de réglage d'inclinaison (91) en fonction de la hauteur du véhicule relié (100) et en fonction de l'état défini par le dispositif de commande de réservoir pour boues liquides (80).

9. Procédé de commande synchronisée de soupapes tubulaires dans un système de double vidange (40) d'un camion-citerne pour boues liquides (10) selon l'une quelconque des revendications 1 à 8, dans lequel le procédé comprend les étapes de
- déterminaison d'une inclinaison du camion-citerne pour boues liquides (10) ; et
- commande d'une première soupape tubulaire (42) et d'une seconde soupape tubulaire (43) en fonction de ladite inclinaison du camion-citerne pour boues liquides (10).

10. Procédé selon la revendication 9, comprenant en outre une action de déterminaison en continu (110) de l'inclinaison et de commande (120) des soupapes tubulaires reliées au premier ou au second tube de transport de boues liquides (410, 411).

11. Procédé selon les revendications 9 ou 10, dans lequel le procédé comprend en outre trois états opérationnels
- un état de remplissage de boues liquides (81) dans lequel la première pompe (60) génère une pression négative à l'intérieur du compartiment de réservoir sous pression pour boues liquides (20) configurée pour introduire les boues liquides (11) dans le compartiment de réservoir sous pression pour boues liquides (20) ;
- un état de distribution de boues liquides (82) dans lequel la première pompe (60) génère une pression positive à l'intérieur du compartiment de réservoir sous pression pour boues liquides (20) configurée pour distribuer les boues liquides (11) à partir du compartiment de réservoir sous pression pour boues liquides (20) sur un champ ; et
- un état de transport (83) configuré pour transporter les boues liquides vers et depuis des emplacements.
